# FASCICULE DE BREVET EUROPEEN

(11) **EP 2 562 023 B1**
(45) Date de publication et mention de la délivrance du brevet: **18.06.2014**
(21) Numéro de dépôt: 11178877.4
(22) Date de dépôt: 25.08.2011
(51) Int. Cl.: B60K 15/035, B60K 15/03, F02M 25/08, F02D 41/00, F02D 41/02, B60K 6/22

(54) **Méthode de contrôle de la pression d'un système à carburant de véhicule hybride**
Methode zur Drucksteuerung eines Kraftstoffsystems für Hybridfahrzeug
Method for checking the pressure of a hybrid vehicle fuel system

(43) Date de publication de la demande: 27.02.2013
(73) Titulaire: Inergy Automotive Systems Research (Société Anonyme), 1120 Bruxelles (BE)
(72) Inventeur: Criel, Bjorn, 1750 SINT-MARTENS-LENNIK (BE); Berard, Jean-François, 92100 Boulogne Billancourt (FR)
(74) Mandataire: de la Bigne, Guillaume Michel Marie

(56) Documents cités:
- WO-A1-2009/103404
- WO-A1-2010/094369
- WO-A1-2011/094704
- US-A- 5 601 065
- US-A1- 2003 098 062
- US-A1- 2007 012 298
- US-A1- 2008 302 341
- US-A1- 2011 166 765

## Description

La présente invention concerne une méthode de contrôle de la pression d'un système à carburant de véhicule hybride.

On parle généralement de véhicule hybride dans le cas d'un véhicule associant l'utilisation d'un moteur thermique et d'un moteur électrique.

Il existe un principe général de fonctionnement pour les véhicules hybrides qui consiste à faire fonctionner soit le moteur électrique, soit le moteur thermique, soit les deux en même temps selon les modèles.

Un des principes particuliers est le suivant:
- lors des phases stationnaires (où le véhicule est immobile), les deux moteurs sont à l'arrêt;
- au démarrage, c'est le moteur électrique qui assure la mise en mouvement de la voiture, jusqu'à des vitesses plus élevées (25 ou 30 km/h);
- lorsque des vitesses plus élevées sont atteintes, le moteur thermique prend le relais;
- en cas de grande accélération, on observe la mise en marche des deux moteurs à la fois, qui permet d'avoir des accélérations équivalentes au moteur de même puissance, voire supérieures;
- en phase de décélération et de freinage, l'énergie cinétique est utilisée pour recharger les batteries (à noter que cette fonctionnalité n'est pas disponible sur tous les moteurs hybrides disponibles sur le marché à l'heure actuelle).

Il résulte de ce principe que le moteur thermique ne fonctionne pas en permanence et que dès lors, les phases de purge du canister (filtre à charbon actif qui évite de relarguer à l'atmosphère, des vapeurs de carburant) ne peuvent pas être assurées normalement puisque lors de celles-ci, de l'air éventuellement préchauffé est mis à circuler dans le canister pour le régénérer (c.à.d. pour désorber les vapeurs de carburant qui y sont adsorbées), cet air étant ensuite admis dans le moteur pour y être brûlé.

Dès lors, pour éviter de charger le canister inutilement, on bloque généralement par défaut la communication entre le réservoir et celui-ci ; il en résulte que les réservoirs à carburant de ces véhicules sont généralement mis sous pression (typiquement, à une pression de l'ordre de 300 - 400 mbar), ce qui se fait généralement par un élément fonctionnel situé après les clapets de ventilation, souvent appelé FTIV (Fuel Tank Isolation Valve) et qui empêche la ventilation (dégazage) du réservoir en dehors des situations de remplissage. Cet élément comprend généralement deux soupapes de sécurité (calibrées aux pressions maximales inférieure et supérieure d'utilisation du réservoir) et un pilotage généralement électrique pour pouvoir mettre à pression atmosphérique le réservoir avant remplissage.

US 5 601 065 A décrit une méthode dans laquelle la pression dans un réservoir est relâchée lorsque le vehicule est à l'arrêt et la pression ou la température dans le reservoir dépasse une valeur prédéterminée pour éviter des déformations dans les parois du réservoir.

Par rapport à leurs homologues métalliques, les réservoirs (ou autres parties des systèmes à carburant) en matière plastique présentent un avantage certain en termes de poids et de facilité de mise en oeuvre. Ils pourraient toutefois poser des problèmes en étant soumis à une pression/un vide en deçà des valeurs " seuil " susmentionnées, lorsqu'elles y sont soumises pour une durée prolongée. On pourrait ainsi assister à une fissuration sous contrainte qui pourrait être aggravée par l'exposition au carburant, la température...

On peut distinguer plusieurs types de fissuration:
- Celle de la peau du réservoir
- Celle des éléments de renforcement ajoutés dans le réservoir pour limiter ces déformation pendant les périodes ou on a une surpression/dépression interne
- Celle d'un autre élément du système.

La présente invention vise à résoudre ce problème en proposant une stratégie/méthode de contrôle d'un système à carburant de véhicule hybride qui permet d'utiliser des pièces en matière plastique avec une sécurité accrue.

Elle est basée sur l'idée de relâcher ponctuellement la pression dans un réservoir à carburant (RàC) en dehors des situations de remplissage afin de soulager la matière plastique. La demanderesse a en effet constaté qu'une telle dépressurisation ponctuelle, même totale, ne chargeait finalement que très peu le canister, typiquement : seulement de l'ordre de 20% comparé à une situation de remplissage.

La présente invention concerne dès lors une méthode de contrôle de la pression d'un système à carburant de véhicule hybride équipé d'un moteur thermique alimenté par un carburant stocké dans un réservoir en matière plastique, et d'un moteur électrique, selon laquelle, lorsque le moteur thermique est à l'arrêt, on effectue les étapes suivantes :
- on obtient une durée de sécurité ;
- on relâche totalement ou partiellement la pression dans le réservoir à carburant après la durée de sécurité.

Le carburant auquel est destinée l'invention peut être de l'essence, du diesel, un biocarburant...et peut avoir une teneur en alcool de 0 à 100%.

Dans le présent mémoire, le système à carburant est un assemblage d'éléments qui sont destinés au moteur thermique un véhicule hybride. Ces éléments comprennent généralement des dispositifs liés au stockage du carburant (réservoir, dispositif de ventilation, canister...) et à son alimentation au moteur.

Les éléments du système à carburant selon l'invention sont en une matière compatible avec chacun des hydrocarbures liquides qu'il est susceptible de traiter. Cette matière doit être inerte chimiquement à la fois vis-à-vis des hydrocarbures liquides volatils et des hydrocarbures liquides lourds aux pressions et aux températures habituelles d'utilisation. Elle peut être une matière plastique ou un métal. Les éléments du système selon l'invention peuvent également être mixtes, c.à.d. comprendre des pièces en métal et des pièces en matière plastique. Selon l'invention, au moins le réservoir à carburant est en matière plastique c.à.d. que l'on utilise un réservoir comprenant une enceinte en matière plastique définissant un volume de stockage. Cette enceinte est de préférence renforcée, par exemple par un renfort fibreux interne ou externe, par des soudures locales ("kiss points"), par un élément renforçant rapporté (sorte de pilier) solidarisant ses parois inférieure et supérieure...

Les matières thermoplastiques donnent de bons résultats dans le cadre de l'invention, notamment en raison des avantages de poids, de résistance mécanique et chimique et de mise en oeuvre facilitée, en particulier lorsque les éléments du système présentent des formes complexes.

En particulier, on peut utiliser des polyoléfines, des polyesters thermoplastiques, des polycétones, des polyamides et leurs copolymères. Un mélange de polymères ou de copolymères peut aussi être utilisé, de même qu'un mélange de matières polymériques avec des charges inorganiques, organiques et/ou naturelles comme, par exemple, mais non limitativement : le carbone, les sels et autres dérivés inorganiques, les fibres naturelles ou polymériques. Il est également possible d'utiliser des structures multicouches constituées de couches empilées et solidaires comprenant au moins un des polymères ou copolymères décrits supra.

Un polymère souvent employé pour les réservoirs à carburant est le polyéthylène. D'excellents résultats ont été obtenus avec du polyéthylène haute densité (PEHD).

De préférence, le réservoir auquel est destinée la méthode selon l'invention présente une structure multicouche comprenant au moins une couche de matière thermoplastique et au moins une couche supplémentaire qui peut, de manière avantageuse, être constituée d'un matériau barrière aux liquides et/ou aux gaz.

La présente invention s'applique bien dans le cas de réservoirs à carburant en PEHD ayant une couche barrière en EVOH.

La méthode selon l'invention vise à éviter de mettre le réservoir sous pression pendant une durée prolongée lorsque le moteur thermique est à l'arrêt c.à.d. généralement lorsque le véhicule fonctionne en mode électrique ou lorsque le véhicule est garé.

Pour ce faire, la méthode selon l'invention prévoit de relâcher totalement ou partiellement la pression dans le réservoir à carburant après une durée de sécurité donnée.

Généralement, ce relâchement de pression est opéré grâce à un dispositif de ventilation. Par "dispositif de ventilation", on entend désigner un ou plusieurs éléments creux connectés entre eux et susceptible d'être inséré(s) dans un circuit de ventilation d'un système à carburant et d'être traversé(s) par des vapeurs de carburant allant généralement du réservoir vers un canister. Ce dispositif est généralement un clapet. De préférence, ce clapet est une FTIV telle que décrite ci-dessus.

Par "canister", on entend généralement désigner une enceinte contenant une substance adsorbant les vapeurs de carburant, usuellement du charbon actif. Le rôle du canister est d'éviter la libération de vapeurs de carburant dans l'atmosphère. Cette enceinte comprend une entrée, par où les vapeurs issues du réservoir à carburant pénètrent, et une sortie, par laquelle l'air épuré en vapeurs de carburant, peut sortir. A noter que lorsque le réservoir est en dépression, de l'air en provenance de l'atmosphère circule de la sortie du canister vers son entrée.

Le terme "connecté" utilisé ci-dessus désigne généralement être directement fixé sur ou être relié par une ligne de connexion. Généralement, la connexion se fait par une ligne.

La méthode selon l'invention est généralement appliquée au système à carburant par un processeur qui peut être intégré à l'ordinateur de bord du véhicule (parfois appelé ECU ou Engine Control Unit), ou par un processeur spécifique au système à carburant (parfois appelé FSCU ou Fuel System Control Unit).

Selon cette variante de l'invention, soit la durée de sécurité est fixe, et stockée dans une mémoire de l'ECU et/ou du FSCU, soit elle est définie (déduite) par ce dernier en fonction de valeurs lues par des capteurs, par exemple de pression et/ou de température. Cette dernière variante est préférée. En particulier, la durée de sécurité peut être définie par le processeur selon une valeur de température lue par un capteur. Typiquement, cette durée peut être infinie lorsque la température est inférieure à une valeur seuil (50[deg.]C par exemple), comprise typiquement entre 50 et 1000h lorsque la température est comprise entre 50 et 60[deg.]C et comprise typiquement entre 0 et 100h lorsque la température dépasse 60[deg.]C.

Selon l'invention, au bout de la durée de sécurité, la pression est soit relâchée entièrement (le réservoir étant alors mis à pression atmosphérique), soit elle est abaissée en deçà d'une valeur prédéterminée. En d'autres termes : elle est abaissée à une pression seuil qui peut être la pression atmosphérique ou une pression positive donnée.

Cette pression seuil est de préférence calculée sur base d'une accumulation de la contrainte dans les éléments du système. Cette accumulation peut être exprimée sur base d'un paramètre d'accumulation intégrant les données suivantes:
- la température
- la durée d'exposition
- le niveau de contrainte dans les éléments de renforcement, qui a un lien direct avec la pression interne dans le réservoir (paramètre qui peut être mesuré par un capteur de pression) et dont le lien avec la contrainte pourrait être déterminé au travers de tables stockées dans un processeur tel que décrit ci-dessus.

Le paramètre d'accumulation pourrait être appliquée sur:
- la peau du réservoir (dont la forme peut varier)
- les éléments de renforcement dans le réservoir
- les éventuels autres éléments en matière plastique mis sous pression (lignes de ventilation, canister, ....)
étant entendu que la valeur finale de la pression seuil tiendra de préférence compte des paramètres d'accumulation de contrainte de tous les éléments du système (peau, renfort ou autre élément).

## Revendications

1. Méthode de contrôle de la pression d'un système à carburant de véhicule hybride équipé d'un moteur thermique alimenté par un carburant stocké dans un réservoir en matière plastique, et d'un moteur électrique, **caractérisé en ce que** lorsque le moteur thermique est à l'arrêt, on effectue les étapes suivantes :
- on obtient une durée de sécurité ;
- on relâche totalement ou partiellement la pression dans le réservoir à carburant après ladite durée de sécurité.

2. Méthode selon la revendication précédente, dans laquelle on utilise un réservoir comprenant une enceinte en matière plastique définissant un volume de stockage, cette enceinte étant renforcée, par exemple par un renfort fibreux interne ou externe, par des soudures locales, par un élément renforçant rapporté solidarisant ses parois inférieure et supérieure.

3. Méthode selon l'une quelconque des revendications précédentes, dans laquelle on utilise un réservoir en PEHD ou polyéthylène haute densité et comprenant une couche barrière en EVOH ou copolymère éthylène-alcool vinylique.

4. Méthode selon l'une quelconque des revendications précédentes, dans laquelle le relâchement de pression est opéré grâce à un clapet.

5. Méthode selon la revendication précédente, dans laquelle le clapet est une FTIV ou "Fuel Tank Isolation Valve".

6. Méthode selon l'une quelconque des revendications précédentes, ladite méthode étant appliquée au système à carburant par un processeur qui peut être intégré à l'ordinateur de bord du véhicule, ou par un processeur spécifique au système à carburant.

7. Méthode selon la revendication précédente, dans laquelle la durée de sécurité est définie par le processeur selon une valeur de température et/ou de pression lue par un capteur.

8. Méthode selon l'une quelconque des revendications précédentes, selon laquelle lorsque le moteur thermique est à l'arrêt, la pression est abaissée à une pression seuil calculée sur la base d'au moins un paramètre d'accumulation de contrainte.

9. Méthode selon la revendication 8, selon laquelle ledit paramètre d'accumulation de contrainte intègre les données suivantes : une température ; une durée d'exposition et un niveau de contrainte dans des éléments de renforcement.

10. Méthode selon l'une des revendications 8 et 9, selon laquelle ledit paramètre d'accumulation de contrainte est appliqué à au moins l'un des éléments suivants : une peau du réservoir ; des éléments de renforcement dans le réservoir ; des éléments en matière plastique mis sous pression tels que des lignes de ventilation et un canister.

11. Méthode selon l'une quelconque des revendications précédentes, selon laquelle ladite durée de sécurité est fixe et stockée dans une mémoire.

12. Méthode selon l'une quelconque des revendications précédentes, selon laquelle ladite durée de sécurité est comprise entre 50 heures et 1000 heures lorsque la température est comprise entre 50°C et 60°C, et ladite durée de sécurité est comprise entre 0 heure et 100 heures lorsque la température dépasse 60°C.

## Patentansprüche

1. Verfahren zur Drucksteuerung eines Kraftstoffsystems für Hybridfahrzeug, das mit einem Verbrennungsmotor, der durch einen Kraftstoff versorgt wird, der in einem Tank aus Kunststoff bevorratet wird, und mit einem Elektromotor versehen ist, **dadurch gekennzeichnet, dass**, wenn der Verbrennungsmotor stillsteht, die folgenden Schritte durchgeführt werden:
- Erhalten eines Sicherheitszeitraums;
- vollständiges oder teilweises Ablassen des Drucks in dem Kraftstofftank nach dem Sicherheitszeitraum.

2. Verfahren nach dem vorhergehenden Anspruch, bei dem ein Tank verwendet wird, der eine Umschließung aus Kunststoff umfasst, die ein Bevorratungsvolumen festlegt, wobei diese Umschließung verstärkt ist, zum Beispiel durch eine interne oder externe Faserverstärkung, durch lokale Schweißnähte, durch ein angebrachtes Verstärkungselement, das dessen untere und obere Wand fest verbindet.

3. Verfahren nach einem der vorhergehenden Ansprüche, bei dem ein Behälter aus HDPE oder Polyethylen hoher Dichte verwendet wird, der eine Sperrschicht aus EVOH oder Ethylen-Vinylalkohol-Copolymer enthält.

4. Verfahren nach einem der vorhergehenden Ansprüche, bei dem das Ablassen des Drucks mit Hilfe einer Ventilklappe erfolgt.

5. Verfahren nach dem vorhergehenden Anspruch, bei dem die Ventilklappe ein FTIV oder "Kraftstofftank-Isolier-Ventil" (Fuel Tank Isolation Valve) ist.

6. Verfahren nach einem der vorhergehenden Ansprüche, wobei das Verfahren auf das Kraftstoffsystem durch einen Prozessor, der in den Bordcomputer des Fahrzeugs integriert sein kann, oder durch einen für das Kraftstoffsystem spezifischen Prozessor angewendet wird.

7. Verfahren nach dem vorhergehenden Anspruch, bei dem der Sicherheitszeitraum durch den Prozessor entsprechend einem Temperaturwert und/oder Druckwert, der von einem Geber ermittelt wird, definiert wird.

8. Verfahren nach einem der vorhergehenden Ansprüche, bei dem, wenn der Verbrennungsmotor stillsteht, der Druck auf einen Schwellendruck gesenkt wird, der auf der Basis mindestens eines Belastungsaufbauparameters berechnet wird.

9. Verfahren nach Anspruch 8, bei dem der Belastungsaufbauparameter die folgenden Daten integriert: eine Temperatur; einen Expositionszeitraum und einen Belastungspegel in Verstärkungselementen.

10. Verfahren nach einem der Ansprüche 8 und 9, bei dem der Belastungsaufbauparameter auf mindestens eines der folgenden Elemente angewendet wird: eine Tankhaut, Verstärkungselemente im Tank; Elemente aus Kunststoff, die unter Druck gesetzt werden, wie Lüftungsleitungen und ein Kanister.

11. Verfahren nach einem der vorhergehenden Ansprüche, bei dem der Sicherheitszeitraum feststehend ist und in einem Speicher gespeichert wird.

12. Verfahren nach einem der vorhergehenden Ansprüche, bei dem der Sicherheitszeitraum zwischen 50 und 1000 Stunden beträgt, wenn die Temperatur zwischen 50 °C und 60 °C beträgt, und der Sicherheitszeitraum zwischen 0 und 100 Stunden beträgt, wenn die Temperatur 60 °C übersteigt.

## Claims

1. A method of controlling pressure of a fuel system of a hybrid vehicle including both an engine fed with fuel stored in a tank made of plastics material and an electric motor, **characterized in that** when the engine is stopped the followings steps are performed:
- getting a safety duration;
- relaxing pressure inside the fuel tank in full or in part after the safety duration.

2. A method according to the preceding claim, wherein a tank including an enclosure made of plastics material defining a storage volume is used, the enclosure being reinforced, for example by internal or external fiber reinforcement, by local bonds, by a fitted reinforcing element connected together its bottom and top walls.

3. A method according to any of the preceding claims, wherein a tank made of HDPE, or high density polyethylene, and including a barrier layer made of EVOH, or ethylene-vinyl-alcohol copolymer is used.

4. A method according to any of the preceding claims, wherein pressure is relaxed by a valve.

5. A method according to the previous claim, wherein the valve is a FTIV or "fuel tank isolation valve".

6. A method according to any of the preceding claims, the method being applied to the fuel system by a processor that may be incorporated in an on-board computer of the vehicle, or by a processor that is specific to the fuel system.

7. A method according to the previous claim, wherein the safety duration is defined by the processor depending on a temperature value and/or pressure value read by a sensor.

8. A method according to any of the preceding claims, wherein when the engine is stopped the pressure is lowered to a threshold pressure determined on the basis of at least one stress accumulation parameter.

9. A method according to the claim 8, wherein said stress accumulation parameter includes the following data: a temperature; a duration of exposure and a level of stress on the reinforcement elements.

10. A method according to any of the claims 8 and 9, wherein said stress accumulation parameter is applied to at least one of: a skin of the tank; reinforcing elements in the tank; pressurized plastic elements such as ventilation lines and a canister.

11. A method according to any of the preceding claims, wherein the safety duration is fixed and stored in a memory.

12. A method according to any of the preceding claims, wherein the safety duration is between 50 hours and 1000 hours when the temperature is between 50 ° C and 60 ° C, and the safety duration is between 0 hours and 100 hours when the temperature exceeds 60 ° C.
